# EUROPEAN PATENT APPLICATION

(11) **EP 4 769 657 A1**
(43) Date of publication of application: **01.07.2026**
(21) Application number: 25222951.3
(22) Date of filing: 12.12.2025
(51) Int. Cl.: H01M 10/647, H01M 10/6555, H01M 10/6572, H01M 50/242

(54) **BATTERY CELL COOLING UNIT, BATTERY MODULE, AND METHOD OF MANUFACTURING BATTERY MODULE**

(30) Priority: 24.12.2024 KR 20240196342
(71) Applicant: SAMSUNG SDI CO., LTD., Yongin-si, Gyeonggi-do 17084 (KR)
(72) Inventor: KIM, Kyoung Soo, 17084 Yongin-si (KR); AHN, Gi Jang, 17084 Yongin-si (KR)
(74) Representative: Marks & Clerk LLP

(57) **Abstract**

A battery cell cooling unit to be arranged between battery cells is provided. The battery cell cooling unit includes: two facing plates in a space between the battery cells and respectively facing the battery cells; a thermoelectric element between the two facing plates and configured to dissipate heat generated by the battery cells; and an elastic pad between the two facing plates and configured to absorb volumetric expansion caused by swelling of the battery cells.

## Description

### BACKGROUND

### 1. Field

Aspects of embodiments of the present disclosure relate to a battery cell cooling unit, a battery module, and a method of manufacturing the battery module.

### 2. Description of the Related Art

Different from primary batteries that are not designed to be (re)charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as of hybrid vehicles or electric vehicles, and for power storage. A secondary battery generally includes an electrode assembly including (or consisting of) a positive electrode and a negative electrode, a case that accommodates the electrode assembly, a terminal part connected to the electrode assembly, etc.

Battery modules including a plurality of battery cells are configured such that a battery cell cooling unit is interposed between battery cells. Conventional battery cell cooling units implement cell cooling by incorporating an insulating material and employing bottom cooling or by allowing a cooling liquid to flow through an interlayer structure between cells. However, such conventional cell cooling units may not sufficiently lower the temperature of the cells or satisfactorily absorb volumetric expansion caused by cell swelling, resulting in deterioration of the cell lifespan.

The above information disclosed in this Background section is for enhancement of understanding of the background of the present disclosure, and therefore, it may contain information that does not constitute related (or prior) art.

### SUMMARY

Embodiments of the present disclosure are directed to a battery cell cooling unit that includes a thermoelectric element for dissipating heat generated by a battery cell and an elastic pad for absorbing volumetric expansion caused by swelling of the battery cell, and to a battery module, and a method of manufacturing the battery module.

However, aspects and features of the present disclosure are not limited to the above aspects and features, and other aspects and features of the present disclosure will be clearly understood by those skilled in the art from the description of the present disclosure below.

According to an embodiment of the present disclosure, a battery cell cooling unit to be arranged (or interposed) between battery cells includes: two facing plates in a space (or formed in an inner space) between the battery cells and respectively facing the battery cells (or facing the respective battery cells); a thermoelectric element (provided) between the two facing plates and configured to dissipate heat generated by the battery cells; and an elastic pad (provided) between the two facing plates and configured to absorb volumetric expansion caused by swelling of the battery cells.

In embodiments, the thermoelectric element may be between the two facing plates at one end of the battery cell cooling unit proximal to electrode terminals (or tabs) of the battery cells, and the elastic pad may be at one end of the battery cell cooling unit distal from the electrode terminals (or tabs) of the battery cells.

In embodiments, the thermoelectric element may be provided between the two facing plates at one end proximal to electrode tabs of the battery cells, and the elastic pad may be at one end distal from the electrode tabs of the battery cells.

In embodiments, the thermoelectric element may have a height less than or equal to half of a height of the battery cells.

In embodiments, the elastic pad may have a height equal to or greater than half of the height of the battery cells.

In embodiments, the thermoelectric element may include two thermoelectric elements (provided) between the two facing plates and respectively facing the two facing plates. The elastic pad may be (provided) between the two thermoelectric elements.

In embodiments, the two facing plates may include (or be made of) aluminum (Al).

In embodiments, the thermoelectric element may be a Peltier element.

In embodiments, the elastic pad may include (or be made of) polyurethane foam or aerogel.

A battery module, according to an embodiment of the present disclosure, includes: a plurality of battery cells and a battery cell cooling unit (interposed) between (adjacent ones of) the battery cells. The battery cell cooling unit includes: two facing plates formed in an inner space (or in a space) between the (adjacent ones of the) battery cells and respectively facing the adjacent ones of the battery cells (or facing the respective battery cells); a thermoelectric element (provided) between the two facing plates and configured to dissipate heat generated by (or from) the battery cells; and an elastic pad (provided) between the two facing plates and configured to absorb volumetric expansion caused by swelling of the battery cells.

In embodiments, the thermoelectric element may be between the two facing plates at one end of the battery cell cooling unit proximal to electrode terminals (or tabs) of the battery cells, and the elastic pad may be at one end of the battery cell cooling unit distal from the electrode terminals (or tabs) of the battery cells.

In embodiments, the thermoelectric element may be provided between the two facing plates at one end proximal to electrode tabs of the battery cells, and the elastic pad is provided at one end distal from the electrode tabs of the battery cells.

In embodiments, the thermoelectric element may have a height less than or equal to half of a height of the battery cells.

In embodiments, the elastic pad may have a height equal to or greater than half of the height of the battery cells.

In embodiments, the thermoelectric element may include two thermoelectric elements (provided) between the two facing plates and respectively facing the two facing plates. The elastic pad may be (provided) between the two thermoelectric elements.

In embodiments, the two facing plates may include (or be made of) aluminum (Al).

In embodiments, the thermoelectric element may be a Peltier element.

In embodiments, the elastic pad may include (or be made of) polyurethane foam or aerogel.

A method of manufacturing a battery module including a plurality of battery cells, according to an embodiment of the present disclosure, includes: providing a battery cell cooling unit including two facing plates (which may be formed in an inner space between the battery cells and facing the respective battery cells), a thermoelectric element (provided) between the two facing plates and configured to dissipate heat generated from (or by) the battery cells, and an elastic pad (provided) between the two facing plates and configured to absorb volumetric expansion caused by swelling of the battery cells; and interposing the battery cell cooling unit between (adjacent ones of) the battery cells.

In embodiments, the thermoelectric element may be between the two facing plates at one end (of the battery cell cooling unit) proximal to electrode terminals (or tabs) of the battery cells, and the elastic pad may be at one end (of the battery cell cooling unit) distal from the electrode terminals (or tabs) of the battery cells.

In embodiments, the thermoelectric element may have a height less than or equal to half of height of the battery cells, and the elastic pad may have a height equal to or greater than half of the height of the battery cells.

In embodiments, two thermoelectric elements may be (arranged) between the two facing plates to respectively face the two facing plates, and the elastic pad may be between the two thermoelectric elements.

According to embodiments of the present disclosure, a thermoelectric element configured to dissipate heat generated by battery cells and an elastic pad configured to absorb volumetric expansion caused by swelling of the battery cells may be included. Accordingly, a structure that cools facing (or lateral) surfaces of the battery cells by using the thermoelectric element instead of the conventional method using a cooling liquid and absorbs volumetric expansion through the elastic pad may be implemented, thereby enabling cooling of the battery cells and absorption of volumetric expansion caused by cell swelling, ultimately improving the lifespan of the battery cells and of the battery module.

According to embodiments of the present disclosure, the use of the thermoelectric element allows the cells to be cooled by using electrical energy, thereby enabling the cooling of the cells to a desired temperature in response to the heat-generation temperature resulting from the operation of the cells.

According to embodiments of the present disclosure, when a relatively high charge/discharge rate (C-rate), such as during fast charging, is employed in a pack structure for electric vehicles (xEVs), lowering the temperature of cells and absorbing volumetric expansion caused by swelling of the cells during charging/discharging operations may be implemented, thereby improving the lifespan of the pack.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1A is a top perspective view of a prismatic secondary battery.
FIG. 1B is a cross-sectional view taken along the line I-I' in FIG. 1A.
FIG. 2A is a perspective view illustrating a conventional battery module.
FIG. 2B is an exploded view of the conventional battery module.
FIGS. 3A and 3B are views illustrating a portion of a battery cell cooling unit of conventional battery modules.
FIGS. 4A and 4B are views illustrating a battery cell cooling unit of a battery module according to an embodiment of the present disclosure.
FIG. 5 is a view illustrating a battery cell cooling unit of the battery module according to another embodiment of the present disclosure.
FIG. 6 is a flowchart describing a method of manufacturing a battery module according to an embodiment of the present disclosure.

### DETAILED DESCRIPTION

Embodiments of the present disclosure will be described below, in detail, with reference to the accompanying drawings. Prior to the description, it is noted that the terms or words used in this specification and claims should not be construed as being limited to their common or dictionary meanings but should be understood as having meanings and concepts in agreement with the present disclosure based on the principle that an inventor can define the concept of each term suitably in order to describe his/her own invention in the best way possible. Accordingly, because the embodiments described in this specification and the configurations illustrated in the drawings are only some examples of the present disclosure and do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described, in detail, with reference to the attached drawings.

Examples of secondary batteries include a coin type, a cylindrical type, a prismatic type, and a pouch type. Aspects of the present disclosure is basically applicable to a prismatic secondary battery. Therefore, the prismatic secondary battery will first be briefly described prior to description of embodiments of the present disclosure.

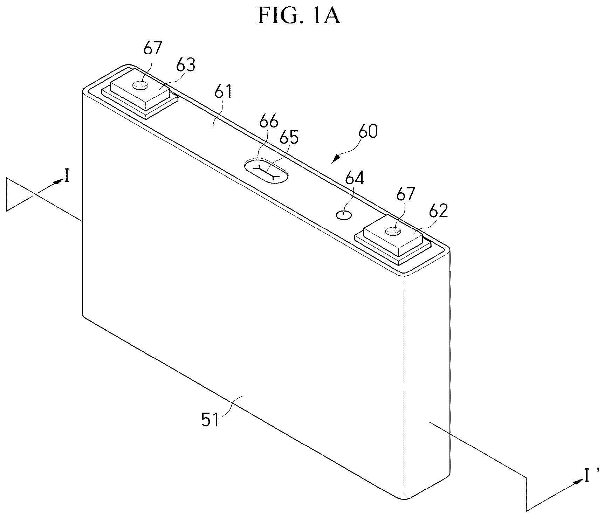

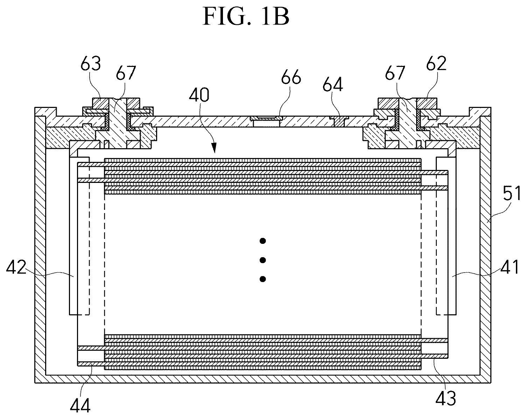

FIG. 1A is a top perspective view of the prismatic secondary battery. FIG. 1B is a cross-sectional view taken along the line I-I' in FIG. 1A.

First, the external appearance of the prismatic secondary battery illustrated in FIG. 1A will be described.

A casing (e.g., a case) 51 defines an overall appearance of the prismatic secondary battery and may be made of a conductive metal, such as aluminum, aluminum alloy, or nickel-plated steel. In addition, the casing 51 forms (or provides) a space for accommodating an electrode assembly therein.

A cap assembly 60 may include a cap plate 61 that covers an opening in the casing 51, and the cap assembly 60 and the cap plate 61 may be made of a conductive material. A first terminal 62 and a second terminal 63 may be electrically connected to respective positive and negative (or negative and positive) electrodes inside the casing 51 and may be installed to protrude outwardly through the cap plate 61.

The cap plate 61 may have an electrolyte injection port 64 formed to receive a sealing plug, and a vent 66 having a notch 65. The vent 66 is for degassing the secondary battery, that is, for exhausting excess gas generated inside the secondary battery.

With reference to FIG. 1B, the internal structure of the prismatic secondary battery and the coupling structure with the cap assembly 60 will be described.

As illustrated in FIG. 1B, the prismatic secondary battery generally includes an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides (e.g., opposite sides) of a separator, which is then bent (or folded) into a Z-stack. Furthermore, the electrode assembly 40 may include one or more electrode assemblies, which are stacked such that their long sides are adjacent to each other and accommodated together in the casing 51, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of a metal foil, such as copper, copper alloy, nickel, or nickel alloy. The first electrode plate may include a first electrode tab (e.g., a first uncoated part) 43, which is a region without application of (e.g., a region without) the first electrode active material. The first electrode tab 43 may act as a current flow passage between the first electrode plate and the first current collector part 41. In some embodiments, the first electrode tab 43 may be formed by cutting the first electrode plate to protrude to one side of the electrode assembly 40 in advance when manufacturing the first electrode plate or may protrude further to one side of the electrode assembly 40 than (e.g., may protrude beyond) the separator without separate cutting.

The second electrode plate may be formed by applying a second electrode active material, such as transition metal oxide to a substrate made of a metal foil, such as aluminum or aluminum alloy. The second electrode plate may include a second electrode tab (e.g., a second uncoated part) 44, which is a region without application of (e.g., a region without) the second electrode active material. The second electrode tab 44 may act as a current flow passage between the second electrode plate and the second current collector part 42. In some embodiments, the second electrode tab 44 may be formed by cutting the second electrode plate to protrude to the other side of the electrode assembly 40 in advance when manufacturing the second electrode plate or may protrude further to the other side than (e.g., may protrude beyond) the separator without separate cutting.

In some embodiments, the first electrode tab 43 may be located on the right end side of the electrode assembly 40, and the second electrode tab 44 may be located on the left end side of the electrode assembly 40. In other embodiments, the first electrode tab 43 and the second electrode tab 44 may be located on one end side of the electrode assembly 40 in the same direction (e.g., on the same side of the electrode assembly 40). Here, the left and the right are referred to based on the orientation of the secondary battery in FIG. 1B for convenience of explanation, and these direction may change in position when the secondary battery is rotated left and right or up and down.

The separator prevents a short circuit between the first electrode plate and the second electrode plate while permitting migration of lithium ions therebetween. The separator may include (or may be made of), for example, a polyethylene film, a polypropylene film, a polyethylene-polypropylene film, or the like.

The first electrode tab 43 of the first electrode plate and the second electrode tab 44 of the second electrode plate extend from both ends (e.g., opposite ends) of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some embodiments, the terminal pins 67 may each have a threaded outer peripheral surface and may be fastened to the first terminal 62 and the second terminal 63 by screwing. However, the present disclosure is not limited thereto. For example, the terminal pins 67 may be coupled to the first terminal 62 and the second terminal 63 by riveting or welding.

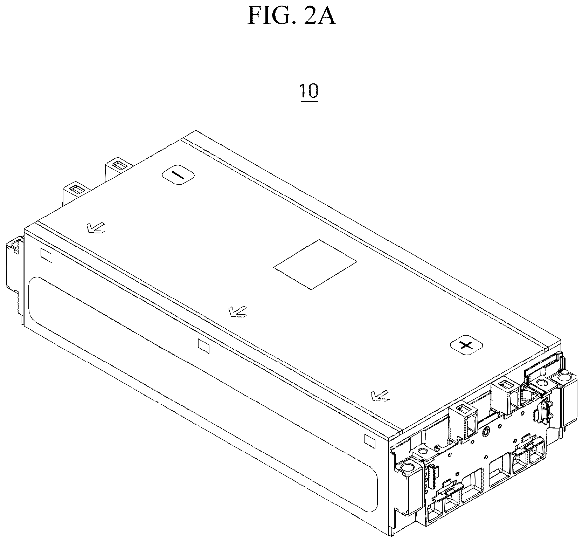

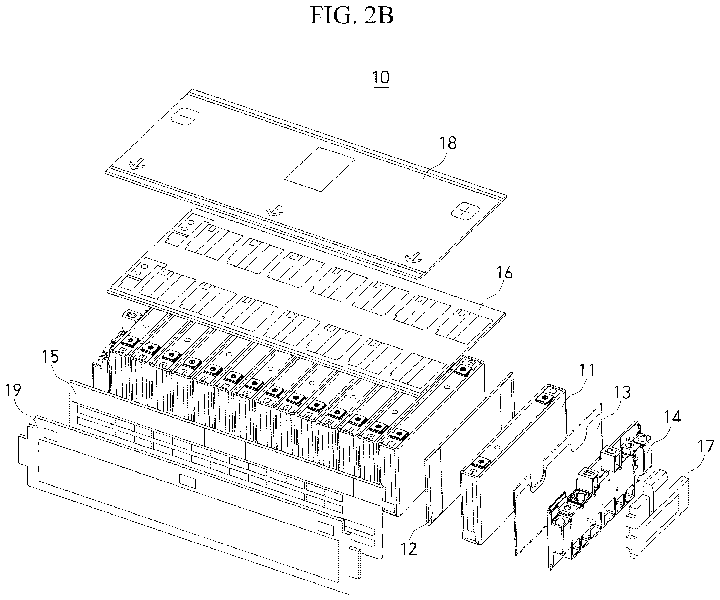

FIG. 2A is a perspective view illustrating a conventional battery module, and FIG. 2B is an exploded view of the conventional battery module shown in FIG. 2A.

Referring to FIGS. 2A and 2B, the conventional battery module 10 may include a plurality of battery cells 11, a battery cell cooling unit 12, an end battery cell cooling unit 13, an end plate 14, a side battery cell cooling unit 15, a bus bar (or bus bar assembly) 16, a cell management controller (CMC) 17, an upper cover 18, and a side plate 19.

The plurality of battery cells 11 may each correspond to a prismatic secondary battery cell described with reference to FIGS. 1A and 1B.

The battery cell cooling unit 12 may be provided between the plurality of battery cells 11 (e.g., between adjacent ones of the plurality of battery cells 11) to prevent current from flowing (e.g., to provide electrical insulation) or heat from being transferred (e.g., to provide thermal insulation) between the plurality of battery cells 11.

The end battery cell cooling unit 13 may be provided between the outermost battery cell 11 and the end plate 14 to prevent current from flowing or heat from being transferred from the outermost battery cell 11 to the outside.

The end plate 14 may be provided outside the outermost battery cell 11 and protects the plurality of battery cells 11.

The side battery cell cooling unit 15 may be provided on side surfaces of the plurality of battery cells 11 to prevent current from flowing or heat from being transferred to the outside through the side surface of the plurality of battery cells 11.

The bus bar 16 may form (or may provide) an electrical connection between the plurality of battery cells 11 to provide a desired capacity and/or output of the conventional battery module 10.

The CMC 17 may monitor and control the current, voltage, and temperature of the plurality of battery cells 11 included in the conventional battery module 10.

The upper cover 18 and the side plate 19 may be respectively provided on upper portions and the side surfaces of the plurality of battery cells 11 and protect the plurality of battery cells 11.

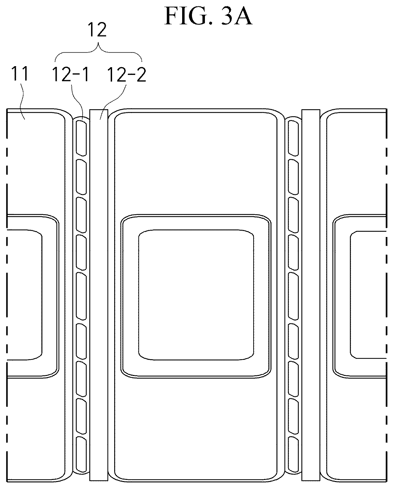

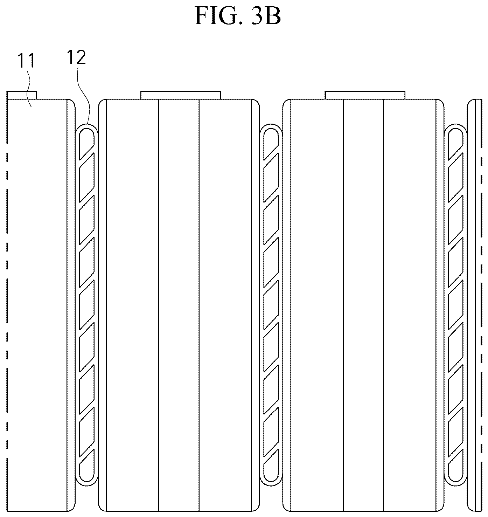

FIGS. 3A and 3B are views illustrating portions of the battery cell cooling unit of conventional battery modules.

Referring to FIG. 3A, which illustrates an example of the battery cell cooling unit 12 of the conventional battery module shown in FIGS. 2A and 2B, a battery cell cooling unit 12 includes a compression pad 12-1 and an insulator 12-2 between battery cells 11. In this example, the compression pad 12-1 has a thickness in a range from 1 mm to 3 mm, and the insulator 12-2 prevents heat from being transferred to adjacent cells in view of the insulating effect of the compression pad 12-1 and the insulator 12-2, thus intended to improve cooling efficiency during bottom cell cooling. However, due to a relatively small cooling surface when using bottom cell cooling compared to a facing (or lateral) surface of the battery cell 11, there is a limit to the cooling of the battery cell 11.

Referring to FIG. 3B, which illustrates another example of the battery cell cooling unit 12 of the conventional battery module shown in FIGS. 2A and 2B, a battery cell cooling unit 12 has an interlayer structure in which cooling liquid flows between battery cells 11. In this example, the battery cell cooling unit 12 having an interlayer structure through which cooling liquid flows cannot absorb volumetric expansion caused by swelling of a battery cell 11 due to the relatively high rigidity of the interlayer structure.

Accordingly, the aforementioned conventional cell cooling units 12 have encountered issues, such as failure to sufficiently lower (or control) the temperature of the cells or satisfactorily absorb volumetric expansion caused by cell swelling, resulting in deterioration of cell lifespan.

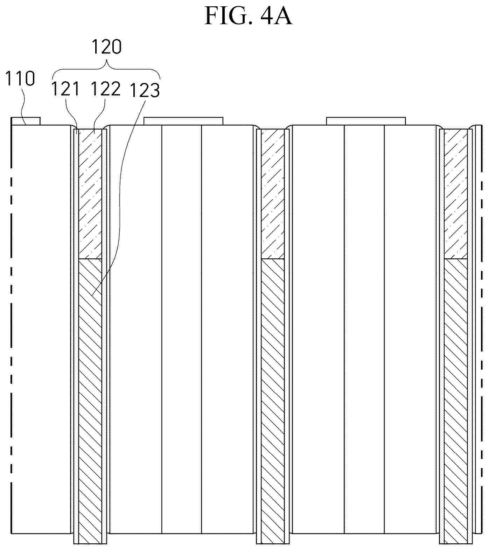

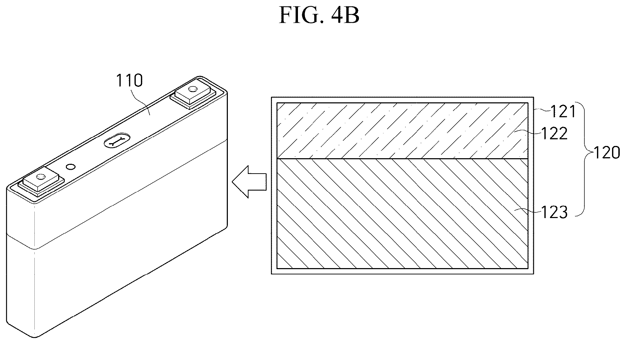

FIGS. 4A and 4B are views illustrating a battery cell cooling unit of a battery module according to an embodiment of the present disclosure.

Referring to FIGS. 4A and 4B, a battery module according to an embodiment of the present disclosure is illustrated. The battery module according to an embodiment of the present disclosure may include a plurality of battery cells 110, and a battery cell cooling unit 120 interposed between (e.g., between adjacent ones of) the battery cells 110.

The plurality of battery cells 110 may each correspond to the prismatic secondary battery cell described with reference to FIGS. 1A and 1B.

The battery cell cooling unit 120 may include two facing plates 121, a thermoelectric element 122, and an elastic pad 123.

The two facing plates 121 may be formed in a space (e.g., an inner space) between the battery cells 110 to face the respective battery cells 110. In embodiments, the two facing plates 121 may be made of aluminum (Al). The two facing plates 121 may both transfer heat generated by the battery cells 110 to the thermoelectric element 122, which will be described later, and primarily suppress volumetric expansion caused by swelling of the battery cells 110. The facing plates 121 may each have a surface area corresponding to that of a front surface or rear surface of the adjacent battery cell 110, which is a largest surface of the battery cell 110, to effectively transfer heat and suppress volumetric expansion.

The thermoelectric element 122 may be provided between the two facing plates 121 to dissipate heat generated by the battery cells 110. The thermoelectric element 122 may be an element that is used to directly convert thermal energy into electrical energy and electrical energy into thermal energy. In some embodiments, the thermoelectric element 122 may use electrical energy to cool the battery cells 110. For example, the thermoelectric element 122 may be a Peltier element.

The elastic pad 123 may be provided between the two facing plates 121 to absorb volumetric expansion caused by swelling of the battery cells 110. The elastic pad 123 may be made of an elasticity material so that, when volumetric expansion occurs due to swelling of the battery cells 110, the elastic pad 123 may compress to absorb the volumetric expansion. In some embodiments, the elastic pad 123 may be made of polyurethane foam or aerogel.

As illustrated in FIGS. 4A and 4B, the thermoelectric element 122 may be provided at one end of the battery cell cooling unit 120 proximal to the electrode tabs (or terminals) of the battery cells 110 between the two facing plates 121, and the elastic pad 123 may be provided at one end of the battery cell cooling unit 120 distal from the electrode tabs (or terminals) of the battery cells 110. Because the thermoelectric element 122 is positioned adjacent to an upper portion of the battery cells 110, where relatively high-temperature components are located, such as the electrode tabs, current collectors, and terminals, the battery cells 110 may be effectively cooled. In some embodiments, the thermoelectric element 122 may have a height less than or equal to half a height of the battery cells 110, thereby intensively cooling the upper portion of the battery cells 110. In one embodiment, the thermoelectric element 122 may have a height corresponding to 1/3 of the height of the battery cells 110. The elastic pad 123 may have a height equal to or greater than half the height of the battery cells 110 to absorb volumetric expansion at a central portion of the battery cells 110 where the volumetric expansion is concentrated when swelling of the battery cells 110 occurs. In one embodiment, the elastic pad 123 may have a height corresponding to 2/3 of the height of the battery cells 110.

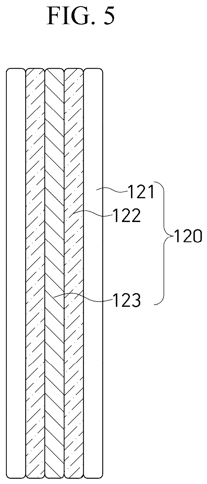

FIG. 5 is a view illustrating a battery cell cooling unit of the battery module according to another embodiment of the present disclosure.

Referring to FIG. 5, the battery cell cooling unit 120 of the battery module, according to another embodiment of the present disclosure, two thermoelectric elements 122 may be provided between the two facing plates 121 to respectively face the facing plates 121. The elastic pad 123 may be provided between the two thermoelectric elements 122.

Because the battery cell cooling unit 120 of the battery module, according to this embodiment of the present disclosure, is formed in a triple-layered structure, as illustrated in FIG. 5, the thermoelectric element 122 may face the facing plates 121, thereby effectively cooling the battery cell 110, and the elastic pad 123, located in the central portion, may absorb volumetric expansion caused by swelling of the battery cells 110.

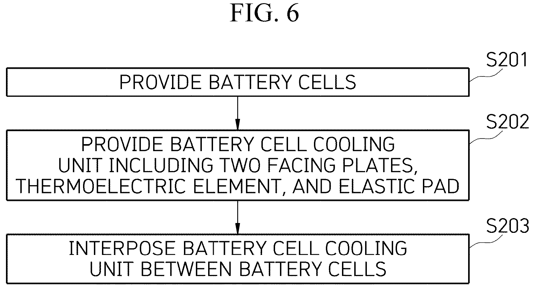

FIG. 6 is a flowchart describing a method of manufacturing a battery module according to an embodiment of the present disclosure.

Referring to FIG. 6, the method of manufacturing the battery module, according to an embodiment of the present disclosure, includes steps S201 to S203.

Step S201 may include providing a plurality of battery cells.

Step S202 may be a step of providing a battery cell cooling unit that includes two facing plates formed in a space between adjacent battery cells to face the respective battery cells, a thermoelectric element provided between the two facing plates to dissipate heat generated by the battery cells, and an elastic pad provided between the two facing plates to absorb volumetric expansion caused by swelling of the battery cells. In some embodiments, step S202 may include a step of providing, between the two facing plates, the thermoelectric element at one end proximal to electrode tabs of the battery cells, and the step of providing the elastic pad at one end of the battery cell cooling unit distal from the electrode tabs (or terminals) of the battery cells. In some embodiments, the step of providing the thermoelectric element may include a step of providing the thermoelectric element with a height less than or equal to half a height of the battery cells. The step of providing the elastic pad may include a step of providing the elastic pad with a height equal to or greater than half the height of the battery cells. In some embodiments, step S202 may include a step of providing two thermoelectric elements between two facing plates to respectively face the two facing plates and a step of providing the elastic pad between the two thermoelectric elements.

Step S203 may be a step of interposing a battery cell cooling unit between the battery cells (e.g., between adjacent battery cells).

Subsequently, in accordance with a method of manufacturing the battery module including the battery cell cooling unit 120 according to embodiments of the present disclosure, the battery module may be completed by additionally assembling an end battery cell cooling unit, an end plate, a side battery cell cooling unit, a bus bar assembly, a CMC, an upper cover, and a side plate.

The above-mentioned method of manufacturing a battery module according to embodiments of the present disclosure has been described with reference to the flowchart shown in the drawing. For brief explanation, the method has been illustrated and described as a series of blocks, but the present disclosure is not limited to the order of the blocks. In other words, some blocks may be executed concurrently (or simultaneously) with other blocks or in a different order than illustrated and described in this specification, and various diverges, flow paths, block sequences may also be implemented if they provide the equivalent or similar results. In addition, to implement the method described in the specification, it is also possible to omit one or more of the blocks.

In the description with reference to FIG. 6, each step may be further divided into additional steps, or some steps may be combined as fewer steps, based on implementation embodiments of the present disclosure. Furthermore, some steps may be omitted, and a sequence of the steps may be changed. In addition, despite other omitted description, the description provided with reference to FIGS. 1A to 5 may be applied to the description provided with reference to FIG. 6. Moreover, the description provided with reference to FIG. 6 may be applied to the description provided with reference to FIGS. 1A to 5.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. For example, one type or more selected from among complex oxides of metal, selected from among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNh_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material and may further include a binder and/or a conductive material.

Content of the positive electrode active material may be in a range of about 90 wt.% to about 99.5 wt.% with respect to the positive electrode active material layer 100 wt.%. Content of the binder and the conductive material may be in a range of about 0.5 wt.% to about 5 wt.% with respect to the positive electrode active material layer 100 wt.%.

Al may be used as the current collector, but the present disclosure is not limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

For example, the negative electrode active material layer may include the negative electrode active material in a range of about 90 wt.% to about 99 wt.%, the binder in a range of about 0.5 wt.% to about 5 wt.%, and the conductive material in a range of 0 wt.% to about 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may act as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Although the present disclosure has been described above in connection with example embodiments and drawings, the present disclosure is not limited to these embodiments. A person having ordinary knowledge in the art to which the present disclosure pertains may modify and change the present disclosure within the scope of the following claims.

## Claims

1. A battery cell cooling unit between battery cells, the battery cell cooling unit comprising:
two facing plates in a space between the battery cells and respectively facing the battery cells;
a thermoelectric element between the two facing plates and configured to dissipate heat generated by the battery cells; and
an elastic pad between the two facing plates and configured to absorb volumetric expansion caused by swelling of the battery cells.

2. The battery cell cooling unit as claimed in claim 1, wherein the thermoelectric element is between the two facing plates at one end of the battery cell cooling unit proximal to electrode terminals of the battery cells, and
wherein the elastic pad is at one end of the battery cell cooling unit distal from the electrode terminals of the battery cells.

3. The battery cell cooling unit as claimed in claim 2, wherein the thermoelectric element has a height less than or equal to half of a height of the battery cells; and, optionally, wherein the elastic pad has a height equal to or greater than half of the height of the battery cells.

4. The battery cell cooling unit as claimed in any preceding claim, wherein the thermoelectric element comprises two thermoelectric elements between the two facing plates and respectively facing the two facing plates, and
wherein the elastic pad is between the two thermoelectric elements.

5. The battery cell cooling unit as claimed in any preceding claim, wherein the two facing plates comprise aluminum (Al).

6. The battery cell cooling unit as claimed in any preceding claim, wherein
(A) the thermoelectric element comprises a Peltier element;
and/or
(B) the elastic pad comprises polyurethane foam or aerogel.

7. A battery module comprising:
a plurality of battery cells; and
a battery cell cooling unit between adjacent ones of the battery cells, the battery cell cooling unit comprising:
two facing plates in a space between the adjacent ones of the battery cells and respectively facing the adjacent ones of the battery cells;
a thermoelectric element between the two facing plates and configured to dissipate heat generated by the battery cells; and
an elastic pad between the two facing plates and configured to absorb volumetric expansion caused by swelling of the battery cells.

8. The battery module as claimed in claim 7, wherein the thermoelectric element is between the two facing plates at one end of the battery cell cooling unit proximal to electrode terminals of the battery cells, and
wherein the elastic pad is at one end of the battery cell cooling unit distal from the electrode terminals of the battery cells.

9. The battery module as claimed in claim 8, wherein the thermoelectric element has a height less than or equal to half of a height of the battery cells; and, optionally, wherein the elastic pad has a height equal to or greater than half of the height of the battery cells.

10. The battery module as claimed in any of claims 7 to 9, wherein the thermoelectric element comprises two thermoelectric elements between the two facing plates and respectively facing the two facing plates, and
wherein the elastic pad is between the two thermoelectric elements.

11. The battery module as claimed in any of claims 7 to 10, wherein the two facing plates comprise aluminum (Al).

12. The battery module as claimed in any of claims 7 to 11, wherein
(A) the thermoelectric element comprises a Peltier element;
and/or
(B) elastic pad comprises polyurethane foam or aerogel.

13. A method of manufacturing a battery module comprising a plurality of battery cells, the method comprising:
providing a battery cell cooling unit, the battery cell cooling unit comprising:
two facing plates;
a thermoelectric element between the two facing plates and configured to dissipate heat generated by the battery cells; and
an elastic pad between the two facing plates and configured to absorb volumetric expansion caused by swelling of the battery cells; and
interposing the battery cell cooling unit between adjacent ones of the battery cells.

14. The method as claimed in claim 13, wherein the thermoelectric element is between the two facing plates at one end of the battery cell cooling unit proximal to electrode terminals of the battery cells, and
wherein the elastic pad at one end of the battery cell cooling unit distal from the electrode terminals of the battery cells; and, optionally, wherein the thermoelectric element has a height less than or equal to half of height of the battery cells, and
wherein the elastic pad has a height equal to or greater than half of the height of the battery cells.

15. The method as claimed in claim 13 or 14, wherein the battery cell cooling unit further comprises two thermoelectric elements between the two facing plates and respectively facing the two facing plates,
wherein the elastic pad is between the two thermoelectric elements.
